# EUROPEAN PATENT SPECIFICATION

(11) **EP 3 189 822 B1**
(45) Date of publication and mention of the grant of the patent: **05.12.2018**
(21) Application number: 16002766.0
(22) Date of filing: 28.12.2016
(51) Int. Cl.: A61G 3/06, B60P 1/44

(54) **CARTS TRANSFER DEVICE WITH AUTOMATICALLY-FOLDABLE BARRIERS**
WAGENTRANSPORTVORRICHTUNG MIT AUTOMATISCH FALTBAREN BARRIEREN
DISPOSITIF DE TRANSFERT DE CHARIOT AVEC BARRIÈRES PLIABLES AUTOMATIQUES

(30) Priority: 07.01.2016 IT UB20169871
(43) Date of publication of application: 12.07.2017
(73) Proprietor: De Rossi, Gabriele, 37060 Sona (VR) (IT)
(72) Inventor: De Rossi, Gabriele, 37060 Sona (VR) (IT)
(74) Representative: Premru, Rok

(56) References cited:
- DE-U1-202012 000 642
- US-A- 5 672 041
- US-A1- 2007 224 025

## Description

The object of the present invention is a device for the access and egress, getting out of/into a vehicle or fixed structure, of any material, in particular loaded on pallets or various casings; even more in particular on carts or the like.

A particular object of the present invention is a device for the access and egress, getting out of/into a vehicle or fixed structure of a person seated in a wheelchair. Said person may be a disable, invalid, patient in rehabilitation or any one person that needs, momentarily or permanently, the aid of a wheelchair.

The problem of allowing the transport of people that are confined to a wheelchair due to limited motor skills is very popular and many mechanisms have been proposed in order to ease the lifting and getting out of the person from a vehicle.

For example, U.S. Pat. No. 5672041 discloses an apparatus for moving an object, such as a wheelchair, between an upper position and a lower position. The upper position is typically adjacent to the floor surface of a vehicle while the lower position is typically at ground level.

However, these solutions are mainly designed for public transportation and do not adapt well to smaller private vehicles, where the space available is much smaller and the structure for the lifting and lowering of a person in a wheelchair from the vehicle (hereinafter referred to as "transfer device") must be less invasive.

This need for smaller overall dimensions is often met at the expense of the solidity of the structure that then, during the movement, may have a wobbly motion.

It should then be considered that the public transportation are intended for travelling on roads with a smooth and flat surface therefore it is not very important that the transfer device is suitable for unloading on an uneven ground or confined spaces.

In particular, the access and egress of the wheelchair from the platform that lifts it is envisaged at only one of the three sides; usually on the rear side. A mobile safety barrier is provided on it that keeps vertical with the platform detached from the ground while it tilts to form an access ramp as it comes into contact with the ground. On the other hand, along the other two sides, two fixed safety barriers are provided.

This mandatory entry direction is not a drawback for a public transportation parking in a mandatory position at the sides of the road, but strongly limits the flexibility of use of the transfer device in a private vehicle that could park in confined spaces, where the access and egress from the platform may be appropriate or possible from different positions from case to case.

One object of the present invention is to eliminate at least in part such drawbacks of the known transfer devices.

In particular, an object of the present invention is to indicate, in a transfer device, safety barriers that lower on all the three free sides of the platform when it comes into contact with the ground.

A further object of the present invention is to indicate, in a transfer device, the formation of access ramps not only on one but on all the three free sides of the platform when the safety barriers lowers in contact with the ground.

A further object, at least of some variants of the present invention, is to indicate a transfer device suitable for the installation at least on some types of private vehicles.

A further object of the present invention is to indicate a transfer device suitable to allow the access and egress of the wheelchair non only rearward but also at a side of the vehicle.

A further object, at least of some variants of the present invention, is to indicate a transfer device making use of kinematic mechanisms having a shape such as to make possible the transfer of loads of at least 1000 kg.

A further object, at least of some variants of the present invention, is to indicate a transfer device suitable for the lifting of materials.

A further object, at least of some variants of the present invention, is to indicate a device for the transfer of materials from one to another fixed structure having planes on different levels.

Further features and advantages of the present invention shall be better highlighted by the following description of a basic version of a transfer device in accordance with the main claims and of some preferred variants in accordance with the dependent claims, the whole illustrated, by way of a non-limiting example, in the annexed drawing tables, wherein:
- Figure 1 shows the side of a vehicles accommodating, at the driver's rear compartment, a person seated in a wheelchair;
- Figure 2 shows, from the rear view, the same vehicle and the person seated in the wheelchair deposited on the ground to the side of the vehicle;
- Figure 3 shows, from the rear view of the vehicle, the transfer device according to the invention in the pre-operating position;
- Figure 4 shows, from the rear view of the vehicle, the transfer device according to the invention in a position herein referred to as access;
- Figure 5 shows, from the rear view of the vehicle, the transfer device according to the invention with the platform at the level of the ground in a position herein referred to as deposited;
- Figure 6 shows, in an overturned section, a detail of the side barriers of the platform shown in Fig. 4;
- Figure 7 shows, in an overturned section, a detail of the side barriers of the platform shown in Fig. 5;
- Figure 8 shows, according to a first possible embodiment, a side view of the system for the lifting and lowering of the side barriers in locked position, that is with raised barriers;
- Figure 9 shows a side view of the system for the lifting and lowering of the side barriers of Fig. 8 in an intermediate position, that is with partially raised barriers;
- Figure 10 shows a side view of the system for the lifting and lowering of the side barriers of Fig. 8 in unlocked position, that is with lowered barriers;
- Figure 11 shows, according to a second possible embodiment variant, a side view of the system for the lifting and lowering of the side barriers in locked position;
- Figure 12 shows a front view of the platform according to a possible variant of the present invention;
- Figure 13 shows from above the coupling between said platform and a first support element;
- Figure 14a shows in a side view the coupling between said platform and a first support element, being the platform in an intermediate position;
- Figure 14b shows in a side view the coupling between said platform and a first support element, being the platform in a pre-operating position;
- Figure 15 shows a side section view of the device according to the present invention in a position herein referred to as pre-operating;
- Figure 16 shows a section view of the device according to the present invention in a possible closed/rest configuration in a position herein referred to as folded.
- Figs., 3.bis, 4.bis, 5.bis schematically show, according to the views of the figs. 3, 4 and 5, respectively, the positions taken by a tilting bridge.

The present invention shall now be described, without any limiting intent, to the particular case of a device for the access and egress, getting out of/into a vehicle by a person seated in a wheelchair.

Unless otherwise specified, in this report any spatial reference such as the terms up/down refers to the position in which the elements are arranged in real conditions.

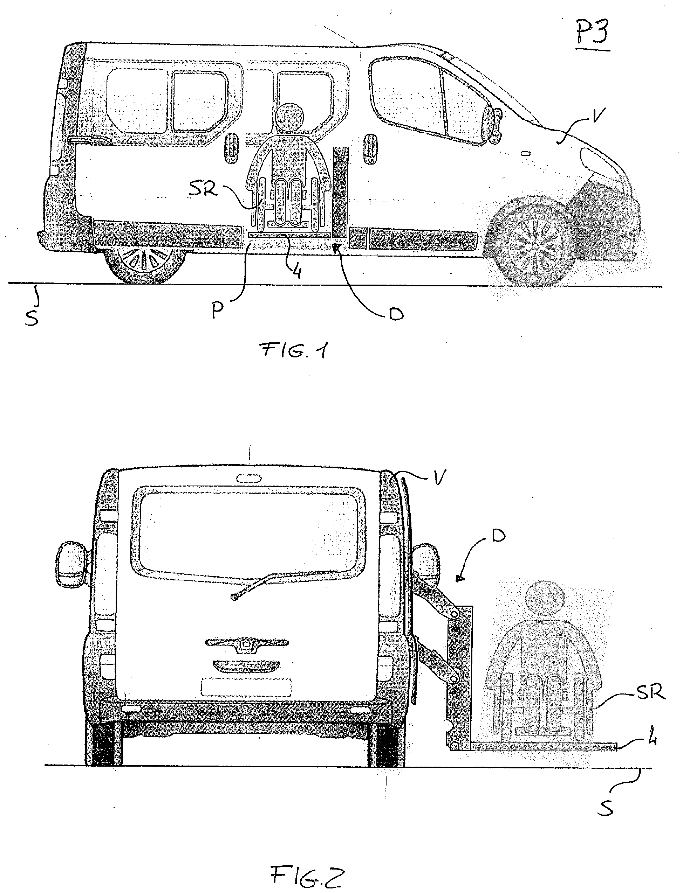

The terms front/rear and right/left refer to the positions of the objects as shown; the clockwise/anticlockwise directions refer to positions and movements of the objects as shown in Fig. 2.

The drawings are substantially but not necessarily to scale (unless otherwise specified) and show possible details but that represent only some of the possible patent choices within the reach of the men skilled in the art.

The device according to the present invention employs articulated quadrilaterals, where articulated quadrilateral means a kinematic chain consisting of four rigid members connected two by two by means of rotoidal pairs (articulation pins); the axes of the rotoids may be parallel to each other (flat articulated quadrilateral) or concurrent in one point (spherical articulated quadrilateral).

It is called "articulated parallelogram" a particular articulated quadrilateral in which the distance among the axes of the articulations of the pairs of opposed rods is the same; the result is that the opposed rods are always parallel to each other during rotation of the same.

The invention makes use of flat articulated quadrilaterals.

In the figure, same parts correspond to same identification symbols.

Fig. 1 shows a vehicle V on the platform P whereof (hereinafter generally referred to as "floor P"), at the rear of the driver's compartment, a wheelchair SR rests; the transfer device D according to the invention is also shown.

In Fig. 2 the wheelchair SR rests on the platform 4 of the transfer device D according to the invention.

The transfer device D according to the invention provides three basic positions:
- a pre-operating position P2 with vertical platform 4 parallel to the axis of the vehicle V;
- an access position P3 with horizontal platform 4 at the level of the floor P of the vehicle V, which allows to get out of or get into the vehicle V;
- a deposit position P4 with horizontal platform 4 at the level of the ground S.

Usefully, the transfer device D may provide a further position consisting in
- a folded position P1 with platform 4 vertical and orthogonal to the axis of the vehicle V, close to the backrest of the front seat.

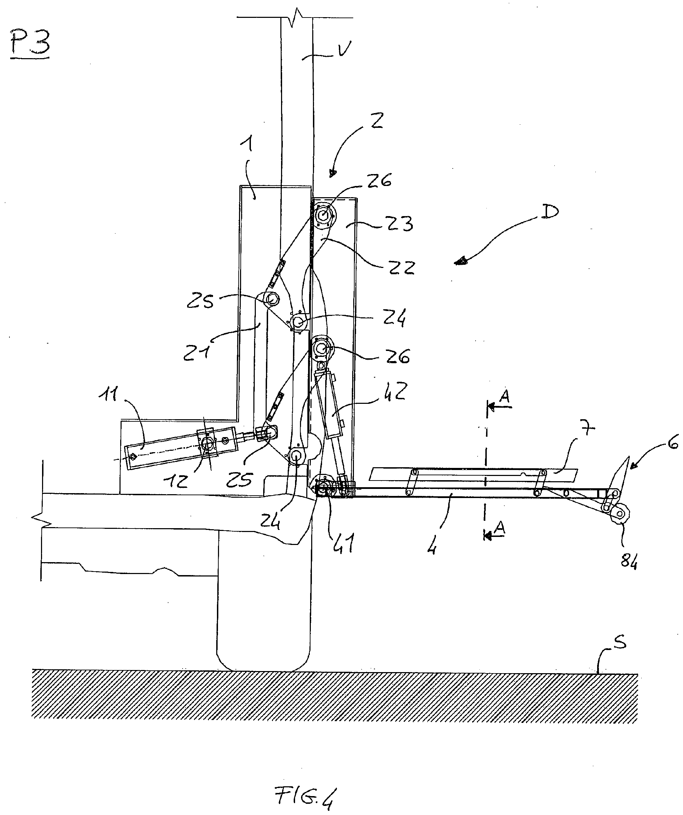

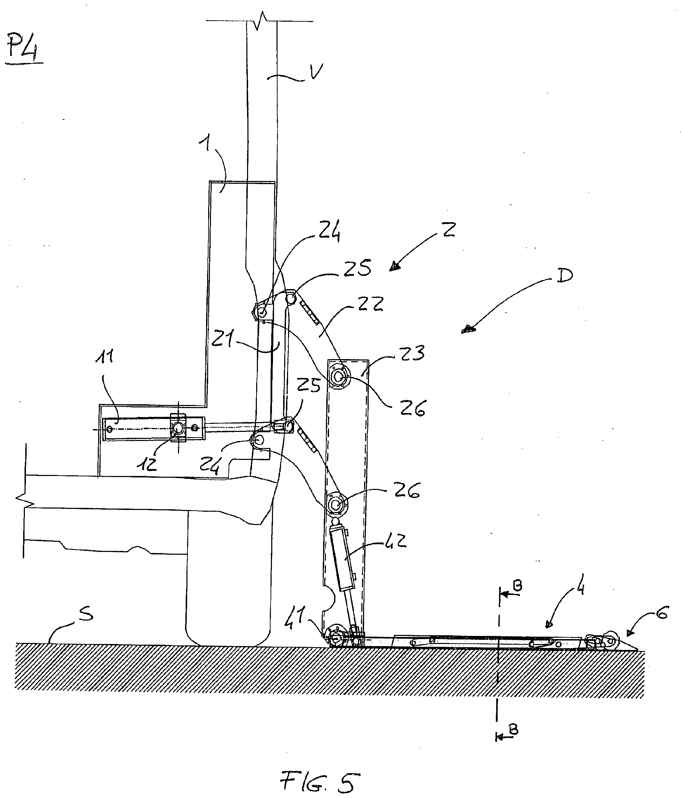

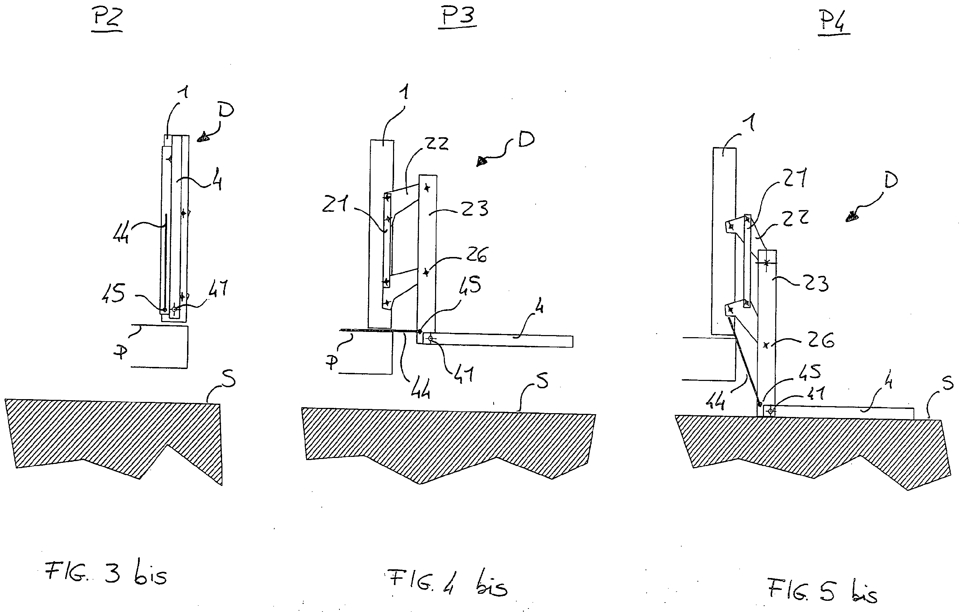

In operating conditions, the platform 4 moves between the deposit position P4 (Fig. 5), in which it is possible to let the wheelchair SR in/out of the platform 4 at the level of the ground S, and the access position P3 (Fig. 4), through which it is possible to let the wheelchair SR in/out of the vehicle V.

According to a preferred variant of the invention, with reference to Figures 1 to 16, the transfer device D provides a support structure 1 (hereinafter housing 1) to whereto a shoulder 23 is translatably constrained that is part of an articulated quadrilateral 2 the two-by-two opposed four rods whereof, are the two crank arms 22 (hereinafter arms 22) and the housing 1 whereto said shoulder 23 is opposed.

The platform 4 whereon the wheelchair SR is positioned during the loading and unloading operations is constrained to the shoulder 23.

The four articulations of the articulated quadrilateral 2 consist in a pair of support pins 24 that rotatably constrain said arms 22 to said housing 1, and a pair of first articulations 26 that rotatably constrain said arms 22 to said shoulder 23.

The platform 4 is rotatably constrained to the shoulder 23 through a first hinge means 41 that has axis of rotation orthogonal to the displacement plane of the articulated quadrilateral 2.

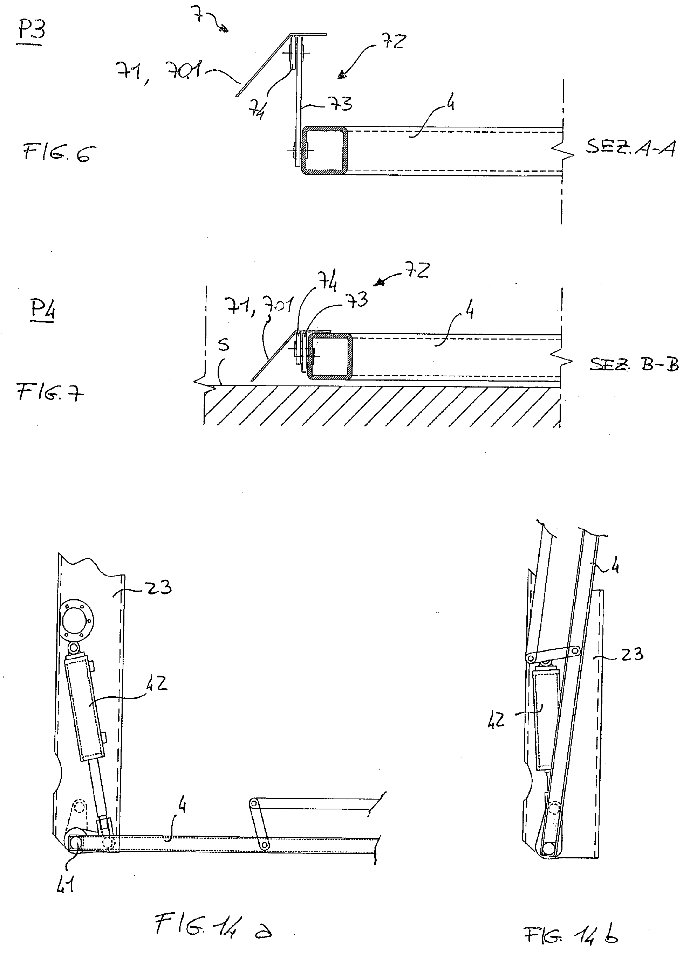

As regards the opening/closing of the platform 4, it is carried out through a linear actuator 42, e.g. electrically actuable, fixed to the shoulder 23 and suitably connected to the said platform 4 (Figs. 14a, 14b).

In a possible embodiment variant, said linear actuator 42 may comprise a hydraulic piston, and the exit and the return of the rod of said hydraulic piston, through the first hinge means 41, carry out the opening and the closing, respectively, of the said platform 4.

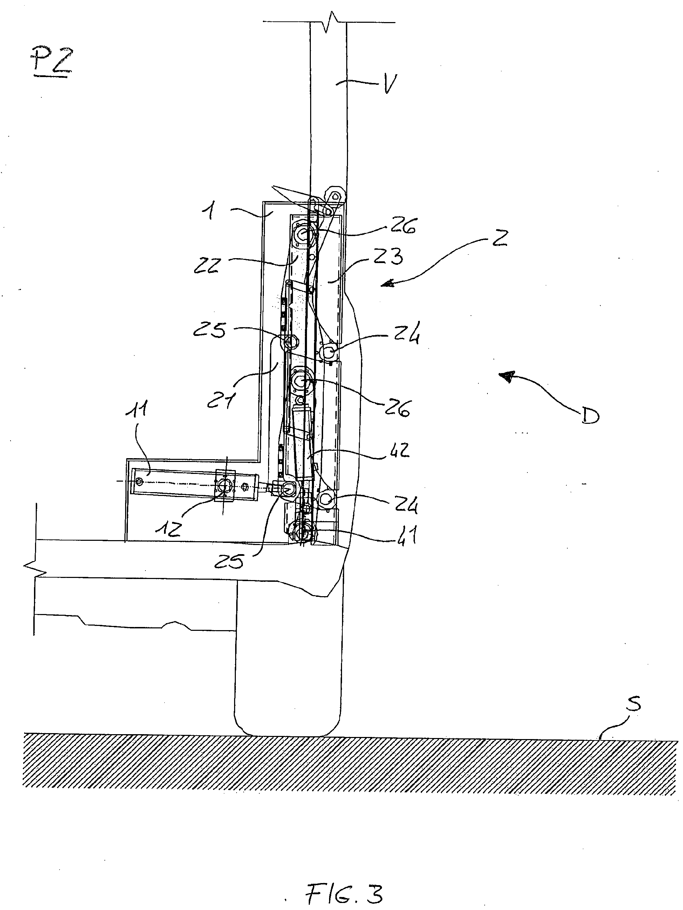

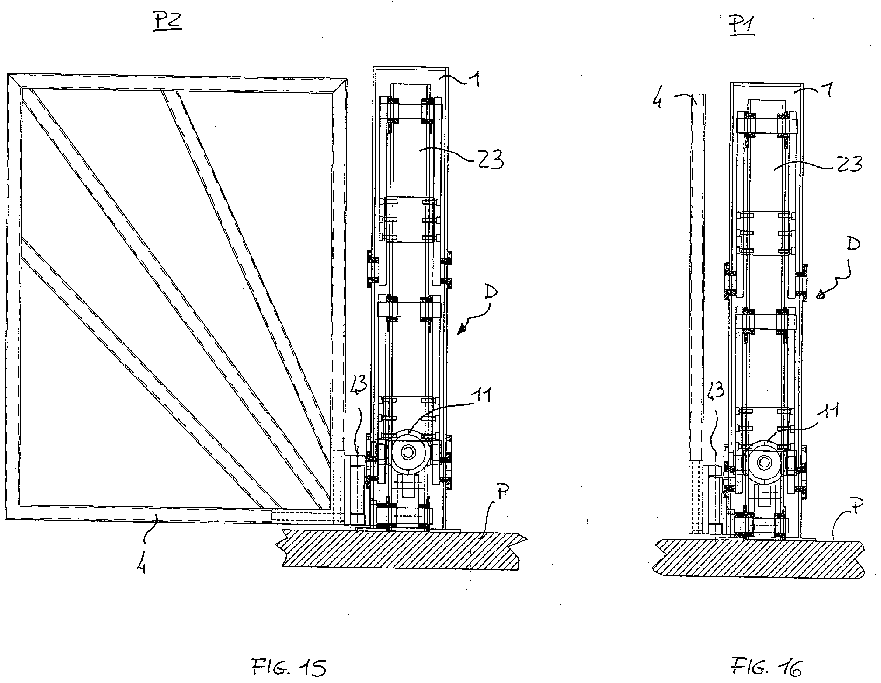

As already mentioned, the transfer device D, provided that the elements so far described have the appropriate dimensions, e.g. those derived from the accompanying figures, allows the following positions of the platform 4 relative to the vehicle:
- the possible folded position P1 (Fig. 16);
- the pre-operating position P2 (Fig. 3, Fig. 15) with
   - shoulder 23 inside the housing 1;
   - vertical platform 4, transverse to the axis of the vehicle V and close to the shoulder 23;
- the access position P3 (Fig. 4) with:
   - shoulder 23 exited from the housing 1;
   - horizontal platform 4 at the height of the floor P of the vehicle V;
- the deposit position P4 (Fig. 5) with:
   - shoulder 23 further stretched externally to the vehicle;
   - horizontal platform 4 in contact with the ground S.

From the pre-operating position P2 to the access position P3 it is passed with rotation of the arms 22 by an angle the amplitude whereof, preferably, is substantially symmetrical relative to the vertical and in the middle of which the support pins 24 reach the maximum distance from the ground S.

With reference to Figs., 3.bis, 4.bis, 5.bis, during the passage from the pre-operating position P2 to the access position P3, a tilting bridge 44, which initially, as explained below, may be located both in horizontal and vertical set-up, rotates about a horizontal hinge 45 (which constrains it to the platform 4 or to the shoulder 23) to move necessarily in a substantially horizontal set-up in access position P3 to then incline on the side of the vehicle V during the passage from the access position P3 to the deposit position P4.

Such tilting bridge 44 is a possible means to establish a continuity between outer edge of the floor P and inner edge of the platform 4 if the distance between such edges, in access position P3, is too long to be easily exceeded by the wheels of the wheelchair SR.

As is intuitive, if the folded position P1 is not provided, such tilting bridge 44 may take naturally, by gravity, the correct set-up in every position of the platform 4. On the other hand, if the folded position P1 is also provided, before such position is reached, it must be rotated in a vertical set-up or manually or, more conveniently, through actuators e.g. linear or rotary not shown in the figures for simplicity of description since their possible embodiments are within the reach of the man skilled in the art.

Usefully, this tilting bridge 44 may be kept in vertical set-up making it adhere to the platform 4 by a magnet. The articulated quadrilateral 2 is moved by a first linear actuator 11, e.g. in the form of hydraulic piston 11 or of an equivalent electric linear actuator which, rotatable about the hinge means 12 that constrains it to the housing 1, directly or indirectly imparts a rotation to the arms 22.

To this end, preferably by means of second articulations 25, a return rod 21 is rotatably constrained to the arms 22 to form a further articulated quadrilateral the four articulations whereof are the said pair of support pins 24 and second articulations 25.

Said further articulated quadrilateral is not necessary from the kinematic point of view but highly preferred because it provides sturdiness and better distribution of the stresses on the structure.

Of course, if in addition to the articulated quadrilateral 2 this further articulated quadrilateral is present, both must be articulated parallelograms.

The first linear actuator 11, instead of acting directly on one of the arms 22, as shown in the accompanying figures, may act on said return rod 21 which in turn transmits the thrust to both arms 22 in a better balanced manner.

In order to arrive at the optional folded position P1 (see Fig. 16), the platform 4, thanks to a second hinge means 43 provided between the platform 4 and the first hinge means 41 that constrains it to the shoulder 23, may rotate, even only by manual action, until moving to a position still vertical but substantially parallel to the backrest of the front seat.

Such option has at least the advantage that the exit through the door used by the platform 4 with transfer device D in non-operating conditions is always ensured. As already said describing the prior art, the current platforms are provided with a plurality of safety barriers that are structural elements installed mainly to act as a block and obstacle to an accidental movement of the wheelchair SR during the lifting or lowering manoeuvres of said platform.

In fact, the wheelchair SR might accidentally move, perhaps due to vibrations or to an incorrect manoeuvre by the user, toward the edge of the platform with an obvious danger for the user, who could fall from the same platform. The safety barriers prevent this kind of situations and preserve the person from falls due to undesired movements of the wheelchair SR.

As already illustrated, the current platforms provide a movable front safety barrier, i.e. able to rotate/tilt to form an access ramp when it reaches the ground, while the side safety barriers are fixed, with the consequent problems previously described.

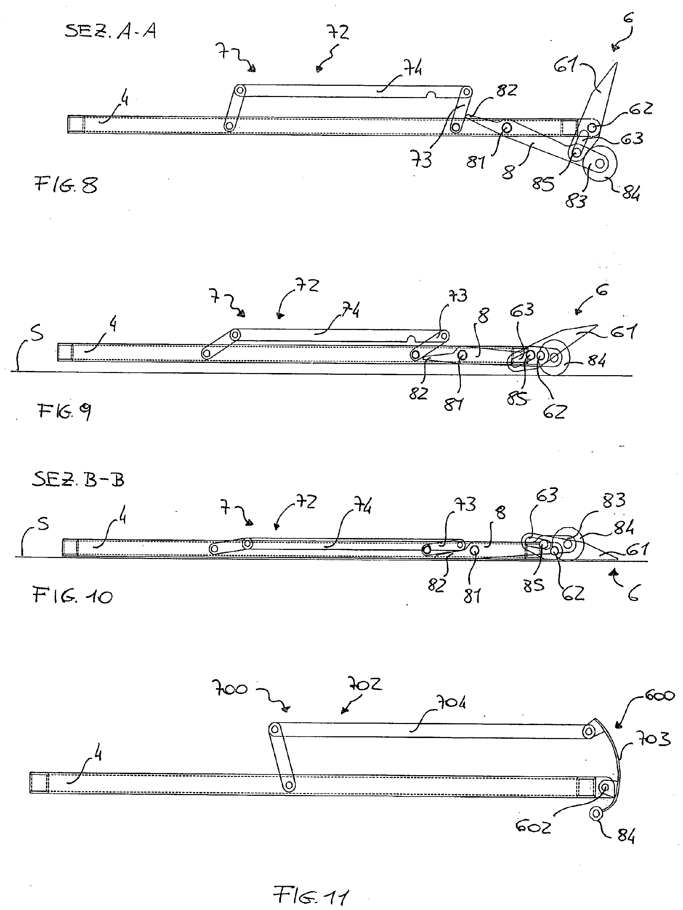

The transfer device D according to the present invention provides suitable kinematic mechanisms comprising the elements 8, 85, 63, 82, 83, 84, 73, 72 shown in Figs. 8-10 or the elements 602, 84, 600, 702, 703, 701, 704 of Figs. 6 and 11 or still others that once the platform 4 is close to the ground S, allow the complete lowering of the safety barriers, not only front but also sideways and at the same time make ascent/descent ramps from/to the platform 4 to/from the ground S available coming to a set-up of the platform 4 herein referred to as unlocked.

As the platform 4 is detached from the ground S, the already said kinematic mechanisms of Figs. 8-10 or Fig. 11 or others raise the barriers and make the ramps inaccessible bringing the platform 4 back to a set-up herein referred to as blocked.

According to the invention, with ref. to Figs. 8-11,
- the front barrier:
   - substantially consists of a plate usable as ramp,
   - is rotatably constrained according to a horizontal axis to the platform 4 so that from a substantially vertical set-up where it serves as a barrier may rotate clockwise to serve as a ramp;
   - keeps the set-up substantially vertical by gravity and/or aid of elastic means and rotates clockwise by the effect of forces that are generated with the contact of the platform 4 with the ground S and that counteract the gravity and/or elastic forces;
- each side safety barrier:
   - comprises an articulated quadrilateral (not necessarily an articulated parallelogram) of which one arm consists of the corresponding side edge of the platform 4 while the opposite arm constitutes a side railing of the barrier,
   - includes the side ramp that is constrained to the railing of the barrier or is a substantial part thereof;
- sliding means capable of sliding on the ground S (in particular a wheel) are connected:
   - with first kinematic mechanisms to the front safety barrier to fold/raise it always when the platform descends/raises;
   - with seconds kinematic mechanisms, which very preferably at least partially coincides the first kinematic mechanisms, to the side safety barriers and actuate them to fold/raise the corresponding railings when they are pressed/detached against/from the ground S by the same platform 4 that descends/raises;
such kinematic mechanisms being therefore adapted to bring the platform 4 from locked to unlocked set-up and vice versa when the said sliding means are pressed/detached against/from the ground S by the same platform 4 that descends/raises.

By way of an example two possible embodiments of such a mechanism and kinematic chain are provided.

According to the first embodiment, and with reference to Figs. 4 to 10, in particular from Fig. 6 to Fig. 10, the transfer device D provides side barriers 7 each comprising a side ramp 71 and an articulated quadrilateral 72.

The front arm 73 of the articulated quadrilateral 72 is capable of rotating from a substantially vertical to a substantially horizontal set-up by the action thereon of a corresponding rocker plate 8 as described below.

In figures 8, 9 and 10 in order to provide a better understanding of the operation of the parts, the side ramp 71 that is suitably fixed to said articulated quadrilateral 72 has not been shown.

A front barrier 6 is suitably hinged to the front edge of the platform 4 with horizontal axis hinges 62 that allow it to rotate from a vertical position (kept even just by gravity or thanks to elastic means not shown) where it serves as an actual barrier 6, to a horizontal position where it serves as a front ramp 6.

In the front of the sides of the platform 4 two rocker plates 8 are hinged, by means of horizontal axis hinges 81, each of which has:
- a rear end 82 suitably shaped to cooperate with the front arm 73 of the articulated quadrilateral 72
- and a front end 83 carrying a sliding means 84 capable of sliding/rotating against the ground S such as a runner 84 or, preferably a hinged wheel 84.
- a linkage 85-63 with a corresponding vertical side 61 of the said front barrier 6 so as to impart a clockwise torque to the same vertical side 61 when moving from locked to unlocked set-up and vice versa in the anticlockwise direction moving from unlocked to locked.

In particular the linkage 85-63 may consist in a sliding coupling that is provided with a pin 85 on the rocker plate 8 that slidingly engages within a guiding means 63 obtained and defined on the vertical side 61 of said front barrier 6 and capable of allowing the sliding of the pin 85 for a predetermined portion according to a direction that passes above the axis of the horizontal hinges 62.

Said guiding means 63 preferably comprises a slot 63.

In any position from the access one P3 to those close to the deposit position P4 but such as not to allow the contact between the sliding means 84 and the ground S, even simply by gravity (or possibly with the help of elastic means), the rocker plates 8 have the front end 83 stretched towards the ground S by as much as is made possible by the linkage 85-63.

Accordingly, the rear ends 82 stretch farthest from the ground S and pressing against the front arms 73 of the articulated quadrilaterals 70, keep them in the most upright position as is made possible by the kinematic mechanism, and then the articulated quadrilaterals 72 keep the side barriers 7 raised.

When the position of the transfer device D is sufficiently close to or coincides with the deposit position P4, the sliding means 84 comes into contact with the ground S and, as a consequence, the pins 85 press for the tilting towards the outside of the front barrier 6 that becomes a ramp 6 while the rear ends 82 are lowered allowing the forward inclination of the front arms 73 of the articulated quadrilaterals 70 such that the side barriers 7 fold back on themselves and the side ramps 71 descend in operating position.

Shapes and relative positions of at least the rocker plate 8, pin 85, guiding means 63, rear end 82, front end 83, sliding means 84, front arms 73 elements of the articulated quadrilaterals 70 are correctly shown to scale at least in Figs. 8, 9 and 10 that therefore show them in the right proportions of a possible embodiment.

Fig. 11 shows a second embodiment variant of the means for controlling the lowering and lifting of the side barriers.

The front barrier 600, is hinged to the front edge of the platform 4 by means of horizontal axis hinges 602 and, in the locked set-up, is kept vertical by the effect of gravity and/or with the aid of elastic means (e.g. torsion springs not shown coaxial to the horizontal axis hinges 602).

The already said sliding means 84 (in particular wheels 84) are hinged directly to the lower edge of the front barrier 600.

Each side barrier 700 comprises an articulated quadrilateral 702 the front arm 703 whereof consists of the corresponding end of the front barrier 600 and a side ramp 701 constrained, fixed or rotatable, to the upper arm 704.

Descending the platform 4 towards the ground S, it goes to the unlocked set-up for the fact that the front barrier 600 rotates clockwise (not shown) and becomes the front access ramp 600; turning this way the front barrier 600 closes the articulated quadrilateral 702 that causes the side ramp 701, constrained to the upper arm 704, to descend, making it available.

Going back up the platform 4, it goes back to the locked set-up for the reverse movement of the elements just described by the effect of gravity and/or elastic means.

Advantageously, although not shown in Figs. 6 and 7, said side ramps 71 or 701 may be installed pivoting relative to the articulated quadrilateral 72 or 702 to which then they are constrained by parallel axis hinges to the upper arms 74, 704, so as to ensure the safety for users and reduce the overall dimensions of the transfer device D when closed.

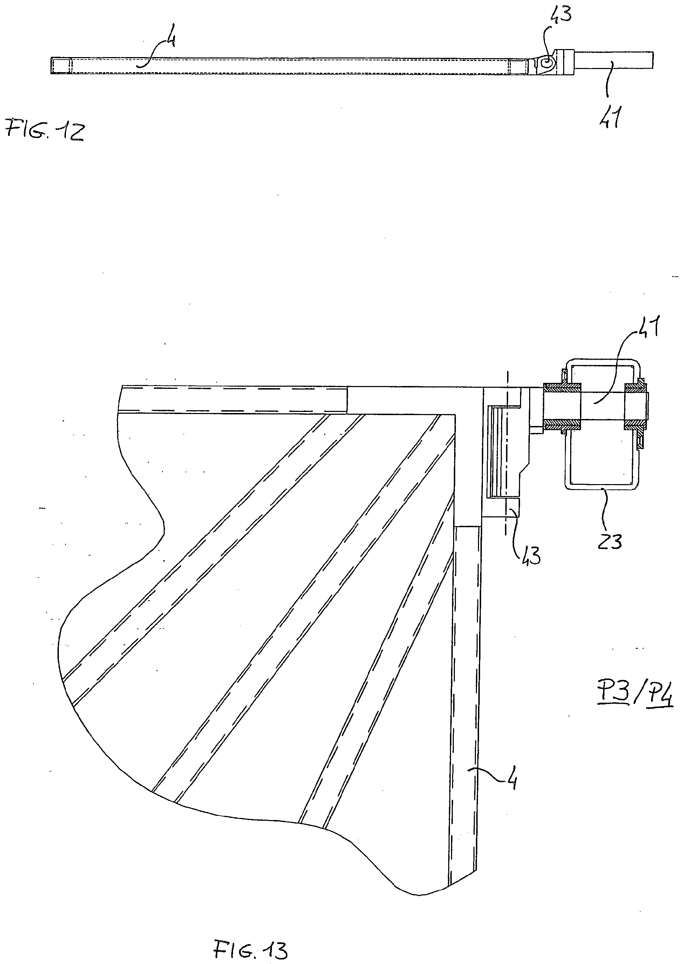

In Figs. 12, 13, 14a and 14b the coupling among the platform 4, the shoulder 23 and the housing 1 is visible.

The platform 4 is rotatably constrained to the shoulder 23 by a first hinge means 41 that has axis of rotation orthogonal relative to the displacement plane of the articulated parallelogram 2.

Said first hinge means 41 allows to rotate the platform 4 so as to be able to switch from the pre-operating position P2 (Fig. 3, Fig. 15) to the intermediate position P3 (Fig. 4) and vice versa.

Furthermore said platform 4 may be provided with a second hinge means 43 arranged between the platform 4 and the first hinge means 41 that constrains it to the shoulder 23.

Said second hinge means 43 allows to rotate the platform 4 from the pre-operating position P2 (Fig. 3, Fig. 15) to the folded position P1 (Fig. 16) and vice versa, so that said platform 4 is arranged vertically and substantially parallel to the backrest of the front seat.

The folded position P1 allows to reduce the overall dimensions of the transfer device D when not used.

The first hinge means 41, used to bring the platform 4 from the pre-operating position P2 to the access position P3 may also be used when the platform 4 reaches the deposit position P4 to better adapt the same to the lying of the ground S that may be not exactly the same.

Also the second hinge means 43, when provided to rotate the platform 4 from the pre-operating position P2 to the folded position P1, may be used in deposit position P4 to adapt the lying of the same platform to that of the ground S. Therefore the lying of the platform 4 may be adapted exactly to that of the ground S being able to rotate about two axes orthogonal to each other.

Many variants are possible without departing from the scopes of the invention, as is exemplified below.

The main advantage of the articulated quadrilateral 2, used in the description for the movement of the platform 4 from the access position P3 to the deposit position P4, is the minimum overall dimensions when in non-operating positions but it is not essential for the purposes of the invention and may be replaced by any other kinematic mechanism at least adapted to move the platform 4 from one to the other of such positions P3 and P4. For example the shoulder 23 that supports the platform 4 may be moved away from the floor P in horizontal direction by corresponding horizontal guides and descend towards the ground S from the floor P by corresponding vertical guides.

According to such embodiment the platform 4 may be moved to even greater distances from the floor P than what made possible by the articulated quadrilateral 2.

Such mechanism with horizontal and vertical guides may be particularly useful when floor P and ground S are the surfaces of a fixed structure (for example, upper and lower floors of a staircase) between which the wheelchair SR or another load are to be moved.

The invention, described with reference to a vehicle V and a wheelchair SR, usefully applies to all of the transfer devices D from a floor P, even belonging to a fixed structure V, to a ground S located at a different level from that of floor P. The invention is useful for the transfer of any load SR, in particular a load on a cart SR, even more in particular a wheelchair SR m in which, for practical and safety reasons, said side safety barriers 7 or 700 and corresponding side ramps 71 or 701 are desirable.

## Claims

1. Transfer device (D) installable on a structure (V), adapted to facilitate the loading and unloading of a load (SR), comprising a support structure (1), configured to be fixed to the floor (P) of the structure (V), whereto, in an at least translatable manner, a platform (4) is constrained whereon said load (SR) is positioned during the loading and unloading operations, which
- it is movable at least from a deposit position (P4), wherein said platform (4) is at the level of the ground (S) to an access position (P3), wherein said platform (4) is at the level of said floor (P) and vice versa always keeping substantially horizontal;
- has side safety barriers (7; 700) coupled to the sides of said platform (4);
- has a front safety barrier (6; 600) rotatably constrained according to a horizontal axis (62; 602) to the said platform (4) so that from a substantially vertical set-up where it serves as a barrier may rotate to serve as a ramp;
**characterised in that**:
- each of said side safety barriers (7; 700) comprises:
- an articulated quadrilateral (72; 702) of which an arm (4) consists of the corresponding side edge of said platform (4) while the opposed arm (74; 704) constitutes the railing (74; 704) of the same side barrier (7; 700),
- a side ramp (71; 701) constrained to said railing (74; 704) or substantial part of the same;
and **in that**:
- sliding means (84) capable of sliding on the ground (S) are connected:
- with first kinematic mechanisms (8, 85, 63, 61; 703) to the said front safety barrier (6; 600),
- with second kinematic mechanisms (8, 73; 600) to the said side safety barriers (7; 700),
- said first (8, 85, 63, 61; 703) and second (8, 73; 600) kinematic mechanisms being adapted to bring said platform (4) from locking to unlocking set-up and vice versa when the said sliding means (84) are pressed/detached against/from said ground (S) from the same platform (4) that goes down/lifts where by locking/unlocking set-up it is meant a set-up wherein said front (6; 600) and side (7; 700) safety barriers respectively allow/prevent the exit of said load (SR) from said platform (4) through the correspondent edges.

2. Transfer device (D) according to the previous claim, **characterised in that**:
- said front barrier (6) is suitably hinged to the front edge of said platform (4) with horizontal axis hinges (62) that allow it to rotate from a vertical position (kept even just by gravity or thanks to elastic means) to a horizontal position;
- in the front part of the sides of said platform (4), two rocker plates (8) are horizontally hinged each of which has:
- a front end (83) carrying said sliding means (84) capable of sliding/rotating against said ground (S),
- a rear end (82) suitably shaped to cooperate with the front arm (73) of the said articulated quadrilateral (72) to bring it from a substantially vertical to a substantially horizontal set-up,
- a linkage (85-63) with a correspondent vertical side (61) of said front barrier (6) so as to impart the same vertical side (61) a torque in a direction when moving from said locking to said unlocking set-up and vice versa in the opposite direction moving from said unlocking to locking.

3. Transfer device (D) according to the previous claim,
**characterised in that**:
the said linkage (85-63) consists in a sliding coupling (85-63) that is provided with a pin (85) on said rocker plate (8) that slidingly engages within a guiding means (63) obtained and defined on said vertical side (61) of said front barrier (6) and capable of allowing the sliding of the said pin (85) for a predetermined portion according to a direction that passes over the axis of the said horizontal axis hinges (62).

4. Transfer device (D) according to the previous claim,
**characterised in that**:
said guiding means (63) comprises a slot (63).

5. Transfer device (D) according to the first claim,
**characterised in that**:
- each of said side barriers (7; 700) is a side barrier (700) that comprises an articulated quadrilateral (702) the front arm (703) whereof is formed by the corresponding end of the said front barrier (600).

6. Transfer device (D) according to any previous claim,
**characterised in that**:
said second (8, 73; 600) and first (8, 85, 63, 61; 703) kinematic mechanisms partly coincide to each other.

7. Transfer device (D) according to any previous claim,
**characterised in that**:
said side ramps (71; 701) are rotatably constrained to said corresponding railings (74; 704) and move to the access/down operating position when the same are in contact with said ground (S).

8. Transfer device (D) according to any previous claim,
**characterised in that**:
said constrain among said support structure (1) and said platform (4) comprises a shoulder (23)
- that is part of a kinematic mechanism (2, 22, 1, 23),
- and to which the platform (4) itself is rotatably constrained via a hinge means (41) with axis orthogonal to the displacement plane of an articulated parallelogram (2);

9. Transfer device (D) according to any previous claim,
**characterised in that** it provides for
a pre-operating position (P2) where said platform (4) takes a vertical set-up parallel to the axis of the said structure (V).

10. Transfer device (D) according to any previous claim,
**characterised in that** it provides for
a folded position (P1) where said platform (4) takes a vertical set-up transverse to the axis of the said structure (V).

11. Transfer device (D) according to any previous claim,
**characterised in that**
a tilting bridge (44) is provided,
- rotatably constrained to said platform (4) via a horizontal hinge (45),
- adapted to the transfer of said load (SR) from said floor (P) to said platform (4) and vice versa
- and capable:
- during the passage from said pre-operating position (P2) to said access position (P3), of moving to a substantially horizontal set-up;
- during the passage from said access position (P3) to said deposit position (P4), of inclining on the side of said structure (V).

12. Transfer device (D) according to the previous claim,
**characterised in that**
said tilting bridge (44) is further capable, during said pre-operating (P2) and folded (P1) positions, of being brought in a vertical set-up.

13. Transfer device (D) according to any previous claim,
**characterised in that**:
said kinematic mechanism (2, 22, 1, 23) envisages an articulated quadrilateral (2) the four rods whereof opposed by twos are the two crank arms (22) and the said support structure (1) and shoulder (23).

14. Transfer device (D) according to the previous claim,
**characterised in that**:
- said articulated quadrilateral (2) is an articulated parallelogram (2),
- a return rod (21) is rotatably constrained to the said crank arms (22) to form a further articulated parallelogram the four rods whereof opposed by twos are the said crank arms (22) and said support structure (1) with said return rod (21).

15. Transfer device (D) according to any previous claim,
**characterised in that**
its movements from pre-operating position (P2) to access position (P3) and to deposit position (P4) besides, optionally from pre-operating position (P2) to optional folded position (P1), are obtained by means of linear actuators.

16. Transfer device (D) according to any previous claim,
**characterised in that**
said load (SR) is a wheelchair (SR).

17. Transfer device (D) according to any previous claim,
**characterised in that**
said structure (V) is a vehicle (V).

18. Transfer device (D) according to the previous claim,
**characterised in that**
it is configured to be mounted on the side of said vehicle (V).

## Patentansprüche

1. Transfervorrichtung (D), die an einer Struktur (V) installierbar ist, die geeignet ist, das Laden und Entladen einer Last (SR) zu erleichtern, umfassend eine Trägerstruktur (1), die konfiguriert ist, um am Boden (P) der Struktur (V) fest gemacht zu werden, an der in einer mindestens übertragbaren Weise eine Plattform (4) befestigt ist, auf der die Last (SR) während der Lade- und Entladevorgänge positioniert ist, wobei
- sie mindestens von einer Ablageposition (P4), auf der sich die Plattform (4) auf der Höhe des Fußbodens (S) befindet, zu einer Zugangsposition (P3), auf der sich die Plattform (4) auf der Höhe des Bodens (P) befindet, und umgekehrt bewegbar ist, wobei sie immer im Wesentlichen horizontal bleibt,
- sie seitliche Sicherheitsbarrieren (7; 700) aufweist, die mit den Seiten der Plattform (4) verbunden sind,
- sie eine vordere Sicherheitsbarriere (6; 600) aufweist, die gemäß einer horizontalen Achse (62; 602) drehbar an der Plattform (4) befestigt ist, so dass sie sich von einer im Wesentlichen vertikalen Anordnung, wo sie als Barriere dient, drehen kann, um als Rampe zu dienen,
**dadurch gekennzeichnet, dass**
- jede der Sicherheitsbarrieren (7; 700) aufweist:
- ein Gelenkviereck (72; 702), von dem ein Arm (4) aus der entsprechenden Seitenkante der Plattform (4) besteht, während der gegenüberliegende Arm (74; 704) das Geländer (74; 704) derselben Seitenbarriere bildet (7; 700),
- eine Seitenrampe (71; 701), die an dem Geländer (74; 704) oder einem wesentlichen Teil desselben befestigt ist,
und dadurch, dass
- Gleitmittel (84), die geeignet sind, auf dem Fußboden (S) zu gleiten, verbunden sind:
- mit ersten kinematischen Mechanismen (8, 85, 63, 61; 703) an der vorderen Sicherheitsbarriere (6; 600),
- mit zweiten kinematischen Mechanismen (8, 73; 600) an den seitlichen Sicherheitsbarrieren (7; 700),
- wobei die ersten (8, 85, 63, 61; 703) und zweiten (8, 73; 600) kinematischen Mechanismen geeignet sind, um die Plattform (4) von der Verriegelungs- zur Entriegelungsanordnung und umgekehrt zu bringen, wenn die Gleitmittel (84) von dieser Plattform (4), die nach unten geht/angehoben wird, gegen den Fußboden (S) gedrückt/von diesem gelöst werden, wobei mit Verriegelungs-/Entriegelungsanordnung eine Anordnung gemeint ist, bei der die vorderen (6; 600) und seitlichen (7; 700) Sicherheitsbarrieren das Austreten der Last (SR) von der Plattform (4) durch die entsprechenden Kanten ermöglichen bzw. verhindern.

2. Transfervorrichtung (D) nach dem vorhergehenden Anspruch,
**dadurch gekennzeichnet, dass**
- die vordere Barriere (6) in geeigneter Weise an der Vorderkante der Plattform (4) mit Scharnieren mit horizontaler Achse (62) angelenkt ist, die es ermöglichen, dass sie sich von einer vertikalen Position (die sogar nur durch Schwerkraft oder durch elastische Mittel gehalten wird) zu einer horizontalen Position dreht,
- im vorderen Teil der Seiten der Plattform (4) zwei Schwingplatten (8) horizontal angelenkt sind, von denen jede aufweist:
- ein vorderes Ende (83), das die Gleitmittel (84) trägt, die geeignet sind, gegen den Fußboden (S) zu gleiten/sich dagegen zu drehen,
- ein hinteres Ende (82), das geeignet geformt ist, um mit dem vorderen Arm (73) des Gelenkvierecks (72) zusammenzuwirken, um es von einer im Wesentlichen vertikalen zu einer im Wesentlichen horizontalen Anordnung zu bringen,
- eine Verbindung (85-63) mit einer entsprechenden vertikalen Seite (61) der vorderen Barriere (6) derart, um der vertikalen Seite (61) ein Drehmoment in einer Richtung zu verleihen, wenn sie sich von der Verriegelungs- zu der Entriegelungsanordnung bewegt und umgekehrt in die entgegengesetzte Richtung, wenn sie sich von der Entriegelung zur Verriegelung bewegt.

3. Transfervorrichtung (D) nach dem vorhergehenden Anspruch,
**dadurch gekennzeichnet, dass**
die Verbindung (85-63) aus einer Schiebeverbindung (85-63) besteht, die mit einem Stift (85) auf der Schwingplatte (8) versehen ist, der gleitend in ein Führungsmittel (63) eingreift, das an der vertikalen Seite (61) der vorderen Barriere (6) erhalten und definiert ist und geeignet ist, das Gleiten des Stiftes (85) für einen vorbestimmten Abschnitt gemäß einer Richtung zu ermöglichen, die über die Achse der Scharniere mit horizontaler Achse (62) verläuft.

4. Transfervorrichtung (D) nach dem vorhergehenden Anspruch,
**dadurch gekennzeichnet, dass**
das Führungsmittel (63) einen Schlitz (63) aufweist.

5. Transfervorrichtung (D) nach dem ersten Anspruch,
**dadurch gekennzeichnet, dass**
- jede der seitlichen Barrieren (7; 700) eine seitliche Barriere (700) ist, die ein Gelenkviereck (700) aufweist, deren vorderer Arm (703) von dem entsprechenden Ende der vorderen Barriere (600) gebildet ist.

6. Transfervorrichtung (D) nach einem der vorhergehenden Ansprüche,
**dadurch gekennzeichnet, dass**
der zweite (8, 73; 600) und der erste (8, 85, 63, 61; 703) kinematische Mechanismus teilweise zusammenfallen.

7. Transfervorrichtung (D) nach einem der vorhergehenden Ansprüche,
**dadurch gekennzeichnet, dass**
die Seitenrampen (71; 701) drehbar an den entsprechenden Geländern (74; 704) befestigt sind und sich zu der Zugangsbetriebsposition/unteren Betriebsposition bewegen, wenn sie mit dem Fußboden (S) in Kontakt sind.

8. Transfervorrichtung (D) nach einem der vorhergehenden Ansprüche,
**dadurch gekennzeichnet, dass**
wobei die Befestigung zwischen der Trägerstruktur (1) und der Plattform (4) eine Schulter (23) aufweist,
- die Teil des kinematischen Mechanismus (2, 22, 1, 23) ist
- und an der die Plattform (4) selbst über ein Scharniermittel (41) mit einer Achse, die orthogonal zu der Verschiebungsebene eines Gelenkparallelogramms (2) ist, drehbar befestigt ist.

9. Transfervorrichtung (D) nach einem der vorhergehenden Ansprüche,
**dadurch gekennzeichnet, dass** sie
eine Vor-Betriebsposition (P2) vorsieht, in der die Plattform (4) eine vertikale Anordnung annimmt, die parallel zu der Achse der Struktur (V) ist.

10. Transfervorrichtung (D) nach einem der vorhergehenden Ansprüche,
**dadurch gekennzeichnet, dass** sie
eine eingeklappte Position (P1) vorsieht, in der die Plattform (4) eine vertikale Anordnung annimmt, die quer zu der Achse der Struktur (V) ist.

11. Transfervorrichtung (D) nach einem der vorhergehenden Ansprüche,
**dadurch gekennzeichnet, dass**
ein kippbarer Steg (44) vorgesehen ist,
- der über ein horizontales Scharnier (45) drehbar an der Plattform (4) befestigt ist,
- der geeignet ist, die Last (SR) von dem Boden (P) zu der Plattform (4) und umgekehrt zu transferieren
- und geeignet ist:
- sich beim Übergang von der Vor-Betriebsposition (P2) in die Zugangsposition (P3) in eine im Wesentlichen horizontale Anordnung zu bewegen,
- sich beim Übergang von der Zugangsposition (P3) in die Ablageposition (P4) auf die Seite der Struktur (V) zu neigen.

12. Transfervorrichtung (D) nach dem vorhergehenden Anspruch,
**dadurch gekennzeichnet, dass**
der kippbare Steg (44) ferner geeignet ist, bei der Vor-Betriebsposition (P2) und der eingeklappten Position (P1) in eine vertikale Anordnung gebracht zu werden.

13. Transfervorrichtung (D) nach einem der vorhergehenden Ansprüche,
**dadurch gekennzeichnet, dass**
der kinematische Mechanismus (2, 22, 1, 23) ein Gelenkviereck (2) vorsieht, dessen vier Stangen, die paarweise gegenüberliegen, die zwei Kurbelarme (22) und die Trägerstruktur (1) und Schulter (23) sind.

14. Transfervorrichtung (D) nach dem vorhergehenden Anspruch,
**dadurch gekennzeichnet, dass**
- das Gelenkviereck (2) ein Gelenkparallelogramm (2) ist,
- eine Umlenkstange (21) an den Kurbelarmen (22) drehbar befestigt ist, um ein weiteres Gelenkparallelogramm zu bilden, dessen vier Stangen, die paarweise gegenüberliegen, die zwei Kurbelarme (22) und die Trägerstruktur (1) mit der Umlenkstange (21) sind.

15. Transfervorrichtung (D) nach einem der vorhergehenden Ansprüche,
**dadurch gekennzeichnet, dass**
ihre Bewegungen von der Vor-Betriebsposition (P2) in die Zugangsposition (P3) und außerdem in die Ablageposition (P4), optional von der Vor-Betriebsposition (P2) in die eingeklappte Position (P1), mittels Linearaktuatoren erzielt werden.

16. Transfervorrichtung (D) nach einem der vorhergehenden Ansprüche,
**dadurch gekennzeichnet, dass**
die Last (SR) ein Rollstuhl (SR) ist.

17. Transfervorrichtung (D) nach einem der vorhergehenden Ansprüche,
**dadurch gekennzeichnet, dass**
die Struktur (V) ein Fahrzeug (V) ist.

18. Transfervorrichtung (D) nach dem vorhergehenden Anspruch,
**dadurch gekennzeichnet, dass**
sie konfiguriert ist, um auf der Seite des Fahrzeugs (V) montiert zu werden.

## Revendications

1. Dispositif de transfert (D) pouvant être installé sur une structure (V), adapté pour faciliter le chargement et le déchargement d'une charge (SR), comprenant une structure de support (1), configuré pour être fixé au sol (P) de la structure (V), dans lequel, de manière au moins translatable, une plate-forme (4) est contrainte sur laquelle ladite charge (SR) est positionnée pendant les opérations de chargement et de déchargement, qui
- est mobile au moins à partir d'une position de dépôt (P4), dans lequel ladite plate-forme (4) est située au niveau du sol (S) jusqu'à une position d'accès (P3), dans lequel ladite plate-forme (4) est au niveau dudit sol (P) et vice-versa en restant toujours sensiblement horizontaux ;
- a des barrières de sécurité latérales (7; 700) couplées aux côtés de ladite plate-forme (4) ;
- comporte une barrière de sécurité avant (6; 600) contrainte en rotation selon un axe horizontal (62; 602) par rapport à ladite plate-forme (4), de sorte que, à partir d'un montage sensiblement vertical où elle sert de barrière, puisse tourner pour servir de une rampe ;
**caractérisé en ce que** :
- chacune desdites barrières de sécurité latérales (7; 700) comprend :
- un quadrilatère articulé (72; 702) dont un bras (4) est constitué par le bord latéral correspondant de ladite plate-forme (4), tandis que le bras opposé (74; 704) constitue la rambarde (74; 704) de la même barrière latérale (7; 700),
- une rampe latérale (71; 701) contrainte à la rambarde (74; 704) ou à une partie substantielle de celle-ci ;
et **en ce que** :
- des moyens coulissants (84) capables de glisser sur le sol (S) (sont connectés :
- avec les premiers mécanismes cinématiques (8, 85, 63, 61 ; 703) de ladite barrière de sécurité avant (6; 600),
- avec des seconds mécanismes cinématiques (8, 73; 600) auxdites barrières de sécurité latérales (7; 700),
- lesdits premier (8, 85, 63, 61 ; 703) et second (8, 73; 600) mécanismes cinématiques étant adaptés pour amener ladite plate-forme (4) du verrouillage au déverrouillage de la mise en place et inversement lorsque lesdits moyens de coulissement (84) sont pressés/détachés contre/du sol (S) depuis la même plate-forme (4) qui descend/lève où, par verrouillage/déverrouillage, on entend un montage dans lequel ledit avant (6; 600) et des barrières de sécurité latérales (7; 700) permettent/empêchent respectivement la sortie de ladite charge (SR) de ladite plate-forme (4) à travers les bords correspondants.

2. Dispositif de transfert (D) selon la revendication précédente,
**caractérisé en ce que** :
- ladite barrière avant (6) est articulée de manière appropriée sur le bord avant de ladite plate-forme (4) avec des charnières à axe horizontal (62) lui permettant de pivoter d'une position verticale (maintenue même par gravité ou grâce à des moyens élastiques) à position horizontale ;
- dans la partie avant des côtés de ladite plate-forme (4), deux bascules (8) sont articulées horizontalement, chacune ayant :
- une extrémité avant (83) portant ledit moyen coulissant (84) apte à coulisser/tourner contre ledit sol (S),
- une extrémité arrière (82) de forme appropriée pour coopérer avec le bras avant (73) dudit quadrilatère articulé (72) afin de l'amener d'un montage sensiblement vertical à un montage sensiblement horizontal,
- une liaison (85-63) avec un côté vertical correspondant (61) de ladite barrière avant (6) de manière à conférer au même côté vertical (61) un couple dans une direction lors du passage dudit verrouillage à ladite configuration de déverrouillage et vice-versa dans le sens opposé passant dudit déverrouillage au verrouillage.

3. Dispositif de transfert (D) selon la revendication précédente,
**caractérisé en ce que** :
ladite liaison (85-63) consiste en un raccord coulissant (85-63) muni d'une broche (85) sur ladite plaque à bascule (8) qui s'engage de manière coulissante dans un moyen de guidage (63) obtenu et défini sur ledit côté vertical (61) de ladite barrière avant (6) et capable de permettre le coulissement dudit axe (85) pour une partie prédéterminée selon une direction qui passe sur l'axe desdites charnières à axe horizontal (62).

4. Dispositif de transfert (D) selon la revendication précédente,
**caractérisé en ce que** :
ledit moyen de guidage (63) comprend une fente (63).

5. Dispositif de transfert (D) selon la première revendication,
**caractérisé en ce que** :
- chacune desdites barrières latérales (7; 700) est une barrière latérale (700) qui comprend un quadrilatère articulé (702) dont le bras avant (703) est formé par l'extrémité correspondante de ladite barrière avant (600).

6. Dispositif de transfert (D) selon l'une quelconque des revendications précédentes,
**caractérisé en ce que** :
lesdits deuxième (8, 73; 600) et premier (8, 85, 63, 61; 703) mécanismes cinématiques coïncident partiellement l'un avec l'autre.

7. Dispositif de transfert (D) selon l'une quelconque des revendications précédentes,
**caractérisé en ce que** :
lesdites rampes latérales (71; 701) sont contraintes en rotation auxdites balustrades correspondantes (74; 704) et se déplacent vers la position de fonctionnement d'accès/descente lorsqu'elles sont en contact avec ledit sol (S).

8. Dispositif de transfert (D) selon l'une quelconque des revendications précédentes,
**caractérisé en ce que** :
ladite contrainte parmi ladite structure de support (1) et ladite plate-forme (4) comprend un épaulement (23)
- faisant partie d'un mécanisme cinématique (2, 22, 1, 23),
- et sur lequel la plate-forme (4) elle-même est contrainte en rotation par l'intermédiaire d'un moyen de charnière (41) d'axe orthogonal au plan de déplacement d'un parallélogramme articulé (2) ;

9. Dispositif de transfert (D) selon l'une quelconque des revendications précédentes,
**caractérisé en ce qu'**il prévoit
une position de pré-opération (P2) où ladite plate-forme (4) prend un montage vertical parallèle à l'axe de ladite structure (V).

10. Dispositif de transfert (D) selon l'une quelconque des revendications précédentes,
**caractérisé en ce qu'**il prévoit
une position pliée (P1) où ladite plate-forme (4) prend un montage vertical transversal à l'axe de ladite structure (V).

11. Dispositif de transfert (D) selon l'une quelconque des revendications précédentes,
**caractérisé en ce que**
un pont basculant (44) est prévu,
- contraint de manière rotative à ladite plate-forme (4) via une charnière horizontale (45),
- adapté au transfert de ladite charge (SR) dudit sol (P) à ladite plate-forme (4) et inversement
- et capable :
- lors du passage de ladite position de pré-opération (P2) à ladite position d'accès (P3), à un montage sensiblement horizontal ;
- lors du passage de ladite position d'accès (P3) à ladite position de dépôt (P4), d'inclinaison du côté de ladite structure (V).

12. Dispositif de transfert (D) selon la revendication précédente,
**caractérisé en ce que**
ledit pont basculant (44) est en outre capable, lors desdites positions de pré-opération (P2) et pliée (P1), d'être amené dans une configuration verticale.

13. Dispositif de transfert (D) selon l'une quelconque des revendications précédentes,
**caractérisé en ce que** :
ledit mécanisme cinématique (2, 22, 1, 23) prévoit un quadrilatère articulé (2) dont les quatre tiges sont opposées par deux sont les deux bras de manivelle (22) et lesdites structure de support (1) et épaulement (23).

14. Dispositif de transfert (D) selon la revendication précédente,
**caractérisé en ce que**:
- ledit quadrilatère articulé (2) est un parallélogramme articulé (2),
- une tige de retour (21) est limitée en rotation auxdits bras de manivelle (22) pour former un autre parallélogramme articulé, les quatre tiges opposées par deux étant lesdits bras de manivelle (22) et ladite structure de support (1) avec ladite tige de retour (21).

15. Dispositif de transfert (D) selon l'une quelconque des revendications précédentes,
**caractérisé en ce que**
ses mouvements de la position de pré-opération (P2) à la position d'accès (P3) et à la position de dépôt (P4) sont également obtenus, éventuellement, de la position de pré-opération (P2) à la position pliée éventuelle (P1), au moyen d'actionneurs linéaires.

16. Dispositif de transfert (D) selon l'une quelconque des revendications précédentes,
**caractérisé en ce que**
ladite charge (SR) est un fauteuil roulant (SR).

17. Dispositif de transfert (D) selon l'une quelconque des revendications précédentes,
**caractérisé en ce que**
ladite structure (V) est un véhicule (V).

18. Dispositif de transfert (D) selon la revendication précédente,
**caractérisé en ce que**
il est configuré pour être monté sur le côté dudit véhicule (V).
